# FASCICULE DE BREVET EUROPEEN

(11) **EP 3 417 712 B1**
(45) Date de publication et mention de la délivrance du brevet: **30.09.2020**
(21) Numéro de dépôt: 18178615.3
(22) Date de dépôt: 19.06.2018
(51) Int. Cl.: A22B 3/00, A22B 3/08

(54) **INSTALLATION D'ÉTOURDISSEMENT PAR GAZ DE VOLAILLES AVANT ABATTAGE**
ANLAGE ZUR GASBETÄUBUNG VON GEFLÜGEL VOR DEM SCHLACHTEN
FACILITY FOR STUNNING POULTRY USING GAS PRIOR TO SLAUGHTER

(30) Priorité: 20.06.2017 FR 1755617
(43) Date de publication de la demande: 26.12.2018
(73) Titulaire: CM2A, 22110 Rostrenen (FR)
(72) Inventeur: CONAN, Gilles, 22480 Saint-Nicolas du Pelem (FR)
(74) Mandataire: Vidon Brevets & Stratégie

(56) Documents cités:
- EP-A1- 2 803 272
- WO-A1-94/27425
- WO-A1-2014/037015
- WO-A1-2015/156668
- FR-A1- 2 854 542
- US-A1- 2015 050 872

## Description

### 1. Domaine de l'invention

La présente invention se rapporte à une installation permettant l'étourdissement de volailles au moyen d'un gaz, tel que le dioxyde de carbone, avant leur abattage.

Par volailles, on entend l'ensemble des oiseaux, appartenant aux gallinacés ou aux palmipèdes, tels que les poulets, poules, canards, cailles, dindes, oies, pintades, et lapins, qui font l'objet de l'aviculture.

### 2. Etat de la technique

L'étourdissement est une étape obligatoire du processus d'abattage de volailles selon la règlementation européenne, de sorte que les volailles ressentent le moins possible de douleur lorsqu'elles sont abattues.

La méthode d'étourdissement choisie influence le bien-être animal, la qualité finale des viandes, mais aussi les conditions de travail des opérateurs.

On abat traditionnellement les volailles en assommant électriquement les volatiles un par un. L'assommage électrique provoque toutefois l'apparition de ruptures d'os et d'hémorragies musculaires et, par conséquent, des défauts d'aspect de la chair des volailles (tâches de sang) et une moindre qualité de viande.

Il est également connu d'effectuer l'étourdissement de volailles par voie gazeuse, notamment par l'utilisation de dioxyde de carbone (voir par exemple les installations décrites dans les documents US 2015/050872 A1 et WO 2015/156668 A1).

Le dioxyde de carbone, quand il est utilisé en une concentration très élevée, n'est pas acceptable parce que les volailles présentent des symptômes de stress, ce qui peut provoquer chez elles des blessures (ailes brisées, pattes cassées,...) et dégrader la qualité de la chair.

### 3. Exposé de l'invention

L'invention ne pose pas ces problèmes liés aux dispositifs de l'art antérieur.

En effet, l'invention concerne une installation pour l'étourdissement de volailles comprenant un tunnel de traitement des volailles, ledit tunnel comprenant au moins :
- une première chambre équipée d'une ouverture d'introduction des volailles dans ledit tunnel et de premiers moyens de transport de la volaille à travers la première chambre jusqu'à une ouverture de transfert des volailles,
- une deuxième chambre équipée d'une ouverture de réception des volailles et de deuxièmes moyens de transport de la volaille à travers la deuxième chambre jusqu'à une ouverture de sortie des volailles dudit tunnel,
- une chambre intermédiaire de passage séparant les première et deuxième chambres et communiquant à ses extrémités avec l'ouverture de transfert de la première chambre et l'ouverture de réception de la deuxième chambre, ladite au moins une chambre intermédiaire étant équipée de troisièmes moyens de transport de la volaille à travers la chambre intermédiaire,
les première et deuxième chambres étant pourvues de moyens d'alimentation en gaz d'étourdissement assurant une augmentation de la concentration de gaz d'étourdissement de l'ouverture d'introduction des volailles dans le tunnel vers l'ouverture de sortie des volailles dudit tunnel.

Selon l'invention, ledit tunnel comprend :
- une partie inférieure sur laquelle sont montés lesdits premiers, deuxièmes et troisièmes moyens de transport, et
- une partie supérieure comprenant une paroi supérieure reliant des parois latérales, ladite partie supérieure reposant sur la partie inférieure et étant reliée à des moyens de levage destinés à soulever ladite partie supérieure par rapport à ladite partie inférieure .

La présente invention se rapporte à une installation industrielle d'étourdissement par voie gazeuse des volailles avant que ces dernières soient abattues.

Cette installation présente deux chambres de traitement ou d'étourdissement séparées par au moins une chambre intermédiaire de transfert. Ces chambres forment un tunnel de passage des volailles de sorte à étourdir ces dernières.

La première chambre présente une ouverture d'entrée pour l'introduction des volailles dans le tunnel et la deuxième chambre une ouverture de sortie pour le transfert des volailles en dehors du tunnel vers une ligne d'abattage.

Dans cette installation, les volailles sont placées sur une durée suffisante dans une première atmosphère régnant dans la première chambre et dont la teneur en dioxyde de carbone est suffisante pour aboutir à un état d'inconscience.

Les volailles étourdies sont ensuite placées dans la chambre intermédiaire, puis transférées sur une durée suffisante dans une seconde atmosphère régnant dans la deuxième chambre et dont la teneur en dioxyde de carbone est suffisante pour étourdir plus fortement les volailles, voir pour les euthanasier.

La mise en œuvre d'un tunnel étanche présentant deux chambres de traitement séparées par au moins un sas intermédiaire de passage permet de maitriser la concentration de dioxyde de carbone sur toute la ligne de traitement (tunnel).

Plus particulièrement, la concentration de dioxyde de carbone est augmentée par degrés dans le sens d'avancement des volailles dans le tunnel, en commençant par une valeur basse en entrée du tunnel de sorte que les volailles ne se stressent pas d'emblée mais restent calmes et s'habituent à la présence de dioxyde de carbone. Cette valeur croît ensuite progressivement jusqu'à ce que les volailles soient étourdies/inconscientes en sortie du tunnel.

Le tunnel est constitué d'une partie inférieure et une partie supérieure reposant sur la partie supérieure et pouvant être soulevée par rapport à cette dernière.

Ceci permet de faciliter l'accès aux chambres du tunnel et leur nettoyage.

Cette installation d'étourdissement par voie gazeuse est fiable, rapide et ne provoque aucune crainte, inconfort ou douleur chez l'animal.

Elle répond en tous points aux exigences de la règlementation en vigueur tout en présentant une grande sécurité de fonctionnement et un rendement amélioré (grand débit de traitement).

Pendant le processus d'étourdissement, les volailles sont dans des conteneurs à caisses, caisses ou tiroirs, par exemple, supprimant ainsi les manipulations et les risques de blessure pour les volailles.

Par ailleurs, la consommation de gaz d'étourdissement de l'installation est moindre que pour les dispositifs existants.

Selon un aspect particulier de l'invention, lesdites ouvertures sont chacune obturées par des portes à guillotines.

Selon l'invention, ladite installation comprend au moins un port d'injection/alimentation en gaz d'étourdissement dans la partie inférieure de la première chambre et au moins un port d'injection/alimentation en gaz d'étourdissement dans la partie inférieure de la deuxième chambre.

Ainsi, l'installation comprend au moins un port d'injection/alimentation en gaz d'étourdissement dans la première chambre et au moins un port d'injection/alimentation en gaz d'étourdissement dans la deuxième chambre.

L'installation met ainsi en œuvre une injection de gaz d'étourdissement en plusieurs endroits du tunnel.

Selon un aspect particulier de l'invention, les bords longitudinaux de la partie inférieure portent des moyens d'étanchéité sur lesquels viennent reposer les parois latérales de la partie supérieure.

Selon un aspect particulier de l'invention, ledit tunnel comprend plusieurs sections de tunnel, au moins une de ces sections étant mobile par rapport à au moins une autre desdites sections.

Selon un aspect particulier de l'invention, l'installation comprend des joints d'étanchéité disposés entre lesdites sections de tunnel assurant l'étanchéité du tunnel.

Selon un aspect particulier de l'invention, lesdits premiers, deuxièmes et troisièmes moyens de transport sont entraînés de façon intermittente de sorte que les volailles se trouvent dans chacune desdites chambres pendant une période d'arrêt de chacun des moyens de transport correspondants.

Selon un aspect particulier de l'invention, l'installation comprend des obstacles au sein desdites chambres destinés contrôler le flux de retour de gaz d'étourdissement de la deuxième chambre vers la première chambre.

Selon un aspect particulier de l'invention, l'installation comprend au moins un toit intérieur disposé dans ladite partie supérieure et réglable en hauteur, ledit au moins un toit intérieur étant destiné à vernir fermer des caisses de volailles portées par les moyens de transport dudit tunnel.

### 4. Liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :
- la figure 1 est une vue schématique, de côté, d'un tunnel de traitement de l'installation pour l'étourdissement de volailles conforme à l'invention,
- la figure 2 est une vue schématique, en perspective, d'une installation pour l'étourdissement de volailles conforme à l'invention,
- la figure 3 est une vue schématique d'une configuration particulière du tunnel de traitement d'une installation conforme à l'invention, et
- les figures 4 et 5 sont des vues en perspective et en coupe transversale respectivement d'une structure particulière de tunnel d'une installation conforme à l'invention.

### 5. Description détaillée de l'invention

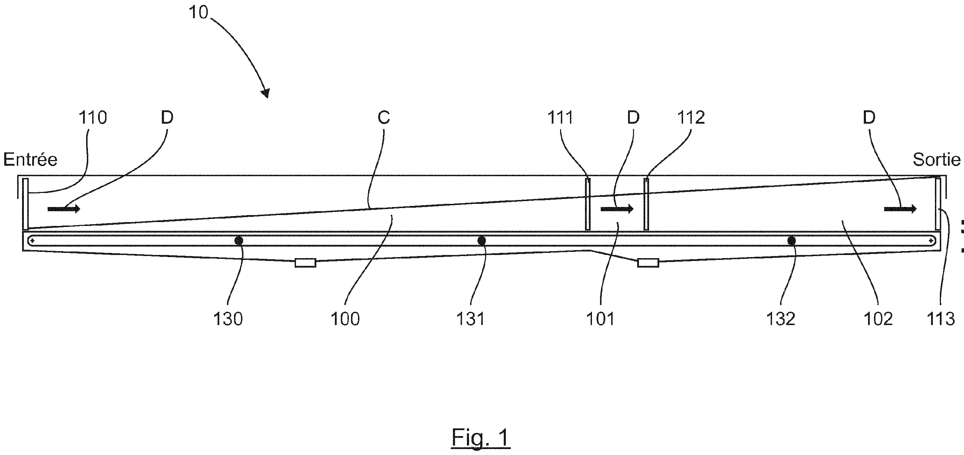

La figure 1 est une vue schématique d'une installation conforme à l'invention permettant l'étourdissement de volailles (canards, cailles ou dindes par exemple) au moyen d'un gaz, tel que le dioxyde de carbone, avant leur abattage.

Cette installation 1 comprend un tunnel 10 qui est, dans cet exemple, de forme rectiligne, à travers lequel les volailles sont transportées dans des caisses de transport (non représentées) disposées sur des moyens de transport mécaniques, tels que des convoyeurs motorisés (convoyeurs à rouleaux, à bandes ou à chaînes, par exemple).

Les volailles, conscientes initialement, sont exposées à un gaz d'étourdissement dans le tunnel 10 qui est, dans cet exemple, divisé en trois chambres, chaque chambre 100, 101, 102 étant équipée d'un convoyeur 100A, 101A, 102A motorisé respectivement, les convoyeurs 100A, 101A, 102A étant alignés.

Plus précisément, le tunnel 10 comprend, dans la direction de transport indiquée par les flèches D, une première chambre 100 de traitement et une deuxième chambre 102 de traitement séparées par une chambre intermédiaire de passage, dit sas intermédiaire, 101.

La première chambre 100 et la deuxième chambre 102 comprennent chacune deux ouvertures, par lesquelles les volailles peuvent être introduites et en être évacuées.

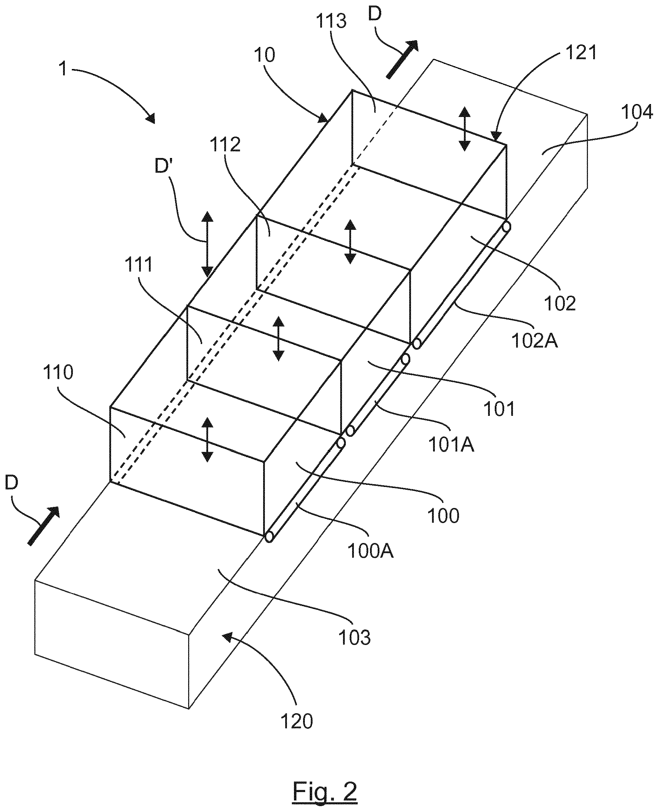

Ces ouvertures sont obturées par des moyens d'obturation prenant la forme de portes à guillotine 110, 111, 112, 113, qui sont aptes à coulisser le long de glissières verticales (comme illustré par les flèches verticales de la figure 2).

L'ouverture de sortie de la première chambre 100 coïncide avec l'ouverture d'entrée du sas intermédiaire 101. L'ouverture de sortie du sas intermédiaire 101 coïncide avec l'ouverture 112 d'entrée de la deuxième chambre 102.

Les parois et portes à guillotine 110, 111, 112, 113 des chambres 100, 102 et du sas intermédiaire 101 sont sensiblement étanches aux gaz lorsqu'elles sont fermées.

L'installation 10 comprend, par ailleurs, des conduits agencés pour distribuer du gaz d'étourdissement dans les première et deuxième chambres 100, 102, uniquement.

Deux ports 130, 131 d'introduction/injection du gaz d'étourdissement sont ménagés dans la partie inférieure de la première chambre 100 (dans la première moitié et la deuxième moitié respectivement de la première chambre 100, dans le sens longitudinal, dans l'exemple illustré), un unique port 132 d'introduction du gaz étant ménagé dans la partie inférieure de la deuxième chambre 102, dans l'exemple illustré.

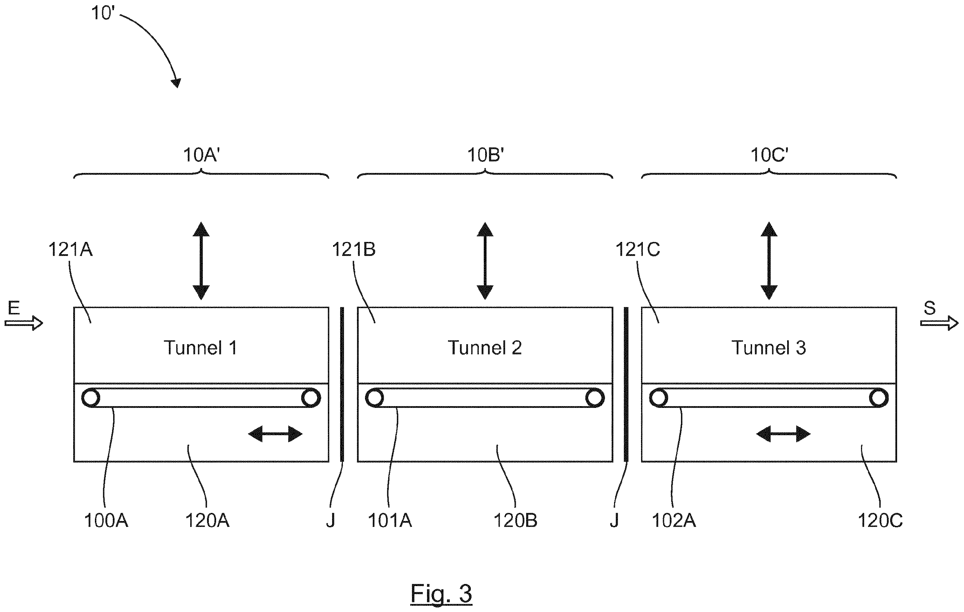

La partie supérieure des chambres correspond à la partie située au-dessus des convoyeurs, la partie inférieure des chambres correspondant à la partie située en-dessous des convoyeurs (ceci est visible en particulier sur la figure 3).

Ainsi, les ports d'injection en gaz d'étourdissement sont situés dans la partie inférieure de la première chambre 100 et de la deuxième chambre 102.

L'installation 10 comprend, en outre des vannes pour commander les débits de gaz et des débitmètres montés sur les conduits de distribution.

L'alimentation en gaz peut être constituée par une ou plusieurs bouteilles de dioxyde de carbone.

Une unité de contrôle commande les vannes de commande de débit de dioxyde de carbone et l'avancement ou l'arrêt des convoyeurs du tunnel 10 en fonction de la taille des volailles à étourdir.

Cette unité de contrôle permet ainsi de réguler le débit et la quantité de dioxyde de carbone introduite dans les première et deuxième chambres du tunnel 10, de même que la durée du traitement d'étourdissement.

Il est, par ailleurs, prévu des capteurs de mesure de la concentration de dioxyde de carbone dans chacune des chambres 100, 102, et éventuellement dans le sas intermédiaire 101, qui sont reliés à l'unité de contrôle.

La mise en œuvre d'un tunnel étanche présentant deux chambres 100, 102 de traitement séparées par un sas intermédiaire 101 permet de maitriser la concentration de dioxyde de carbone sur toute la ligne de traitement (tunnel).

Plus particulièrement, la concentration de dioxyde de carbone est augmentée par degrés dans le sens d'avancement des volailles dans le tunnel 10, en commençant par une valeur basse en entrée du tunnel (rampe C de la figure 1) de sorte que les volailles ne se stressent pas d'emblée mais restent calmes et s'habituent à la présence de dioxyde de carbone. Cette valeur croît ensuite progressivement jusqu'à ce que les volailles soient étourdies/inconscientes en sortie du tunnel 10.

Préalablement au traitement d'étourdissement des volailles dans le tunnel 10, on emplit la première chambre 100 d'un mélange gazeux comprenant une concentration inférieure à 40% en volume de dioxyde de carbone, et la deuxième chambre 102 d'un mélange gazeux comprenant une concentration supérieure à 40% en volume de dioxyde de carbone.

On obtient la concentration de dioxyde de carbone désirée dans les deux chambres 100, 102 (cette concentration ne dépasse pas une valeur seuil pour éviter les convulsions des volailles), la concentration de dioxyde de carbone étant plus élevée dans la deuxième chambre 102 que dans la première chambre 100 et le sas intermédiaire 101.

Pendant le traitement d'étourdissement des volailles dans le tunnel 10, la quantité de dioxyde de carbone introduite dans la première chambre 100 et la deuxième chambre 102 est contrôlée de sorte que la concentration de dioxyde de carbone croît progressivement dans la direction de transport D du tunnel 10, entre l'ouverture d'entrée de la première chambre 100 et l'ouverture de sortie de la deuxième chambre 102.

En d'autres termes, pour le bien-être animal et la qualité finale de la viande, le cycle d'étourdissement présente une montée progressive (ou rampe) du taux de dioxyde de carbone de l'entrée vers la sortie du tunnel 10.

Cette montée progressive de la concentration en dioxyde de carbone dans le tunnel 10 est maintenue au cours du traitement d'étourdissement des volailles par le fait que :
- le sas intermédiaire 101 isole la première chambre 100 de la deuxième chambre 102, son ouverture 111 d'entrée ne pouvant être ouverte que si son ouverture 112 de sortie est fermée, et inversement,
- la porte 110 d'entrée de la première chambre 100 ne peut être ouverte que si sa porte 111 de sortie est fermée, et inversement,
- la porte 112 d'entrée de la deuxième chambre 102 ne peut être ouverte que si sa porte 113 de sortie est fermée, et inversement, et que
- on injecte de façon continue ou discontinue du dioxyde de carbone dans la première chambre 100 et la deuxième chambre 102. En d'autres termes, une fois les conditions de dioxyde de carbone établies, une alimentation en (dis)continue en dioxyde de carbone de la deuxième chambre 102, et éventuellement de la première chambre 100, par le biais d'un trou calibré demeure (les chambres 100, 101, 102 du tunnel 10 ayant des taux de dioxyde de carbone différents, il convient de maîtriser l'injection par zone).

De cette façon, on maintient la montée progressive de la concentration en dioxyde de carbone dans le tunnel 10.

En effet, au cours du traitement, une partie du mélange de dioxyde de carbone de la deuxième chambre 102 s'écoule vers la première chambre 100 via le sas intermédiaire 101, puis quitte le tunnel par la porte 110 lorsque cette dernière est ouverte pour introduire des volailles dans le tunnel 10.

Il peut être prévu plusieurs chicanes ou obstacles souples au sein du tunnel 10, dans chacune des chambres 100, 102, de sorte :
- à contrôler le flux de retour du dioxyde de carbone de la deuxième chambre 102 vers la première chambre 100 dû au déplacement des caisses de volailles au sein du tunnel 10 et à l'ouverture des portes 111, 112 à guillotines situées entre les chambres 100, 102 du tunnel 10, et
- à maintenir cette montée progressive de la concentration en dioxyde de carbone dans le tunnel 10.

Ces obstacles souples (non représentés) sont disposés dans la partie inférieure et/ou dans le partie supérieure des convoyeurs 100A, 101A, 102A notamment, pour contrôler le flux de retour du gaz et la teneur en dioxyde de carbone des zones du tunnel.

On comprend que, sans la mise en œuvre d'un sas intermédiaire 101 notamment, il ne serait pas possible d'obtenir cette augmentation progressive de la concentration en dioxyde de carbone.

La régulation du gaz se fait au niveau de la partie inférieure des chambres située sous le convoyeur correspondant.

Ainsi, la partie inférieure de chacune des première et deuxième chambres 100, 102, forme une cuve dont le volume permet de tamponner le gaz injecté par le port d'introduction du gaz correspondant (qui est situé, pour mémoire, dans cette partie inférieure) et d'ajuster la concentration du gaz dans la partie supérieure de la chambre.

De la sorte, on maintient la montée progressive de la concentration en dioxyde de carbone dans le tunnel.

La figure 2 est une vue schématique partielle, en perspective, d'une installation 1 conforme à l'invention.

Pour le bien être animal et la qualité finale des produits, la configuration du tunnel permet la mise en œuvre d'un cycle d'étourdissement en plusieurs étapes décrites ci-après.

Ainsi, dans cette installation 1 conforme à l'invention, les caisses de volailles vivantes sont disposées sur une zone de chargement 103, puis elles sont introduites (par rangées de trois caisses par exemple) dans la première chambre 100 du tunnel 10 par un convoyeur d'amenée vers le convoyeur motorisé 100A. Pour ce faire, l'ouverture d'entrée 110 est ouverte puis refermée une fois un lot de caisses introduit dans la première chambre 100.

On fait passer les volailles de ce lot dans la première chambre 100 qui est équipée de deux dispositifs d'injection de dioxyde de carbone et d'une ou plusieurs chicanes. Les caisses sont convoyées et maintenues stationnaires dans l'atmosphère de la première chambre 100 pendant une période de suffisante pour que les volailles s'habituent au manque d'oxygène dans l'atmosphère. La première chambre 100 induit d'abord un étourdissement léger (somnolence) des volailles, puis une perte de connaissance.

Le convoyeur 100A de la première chambre 100 est entraîné de façon intermittente de sorte que les volailles se trouvent dans la première chambre 100 pendant une période d'arrêt du convoyeur 100A.

Plus précisément, dans la première chambre 100, est mise en œuvre une montée progressive du dioxyde de carbone.

Il a été démontré que si les volailles respiraient directement du dioxyde de carbone sans oxygène, elles s'agiteraient et seraient dans un état de panique.

La présence d'oxygène dans le mélange de gaz assure au contraire qu'elles ne se débattent pas et s'habituent à la présence de dioxyde de carbone.

Dès que l'étourdissement désiré dans la première chambre 100 est obtenu, on peut augmenter l'étourdissement des volailles par transfert des volailles dans la deuxième chambre 102 via le sas intermédiaire 101 étanche de passage (les portes 111 et 112 sont ouvertes successivement, l'ouverture de la porte 112 n'intervenant qu'une fois la porte 111 refermée).

Les volailles traversent le sas intermédiaire 101 sur le convoyeur motorisé 101A. Le convoyeur 101A est entraîné de façon intermittente de sorte que les volailles se trouvent dans le sas intermédiaire 101 pendant une période d'arrêt du convoyeur 101A.

Dans la deuxième chambre 102 qui est équipée d'un seul dispositif d'injection de gaz et d'une ou plusieurs chicanes, une montée plus élevée et progressive de la concentration en dioxyde de carbone est mise en œuvre pour augmenter l'étourdissement des volailles et les étourdir fortement, de manière à ce que les volailles ne reprennent pas conscience avant l'abattage, ou les euthanasier.

Les volailles traversent la deuxième chambre 102 sur le convoyeur motorisé 102A. Le convoyeur 102A est entraîné de façon intermittente de sorte que les volailles se trouvent dans la deuxième chambre 102 pendant une période d'arrêt du convoyeur 102A.

A la sortie du tunnel 10 est ménagée une zone de déchargement 104 des volailles, qui sont ensuite soumises à un traitement d'abattage usuel (l'ouverture de la porte 113 n'intervient que si la porte 112 est fermée).

Entre ces deux chambres 100, 102, les volailles transitent par le sas intermédiaire 101 de passage dans lequel la concentration en dioxyde de carbone croît progressivement également.

On rappelle que sur toute la longueur du tunnel 10, la concentration en dioxyde de carbone croît progressivement comme illustré par la rampe C de la figure 1.

Les convoyeurs 100A, 101A, 102A motorisés de la première chambre 100, du sas intermédiaire 101 et de la deuxième chambre 102 sont entrainés de façon discontinue, par intermittence, de sorte que les volailles résident dans chacune des chambres 100, 102, et le sas intermédiaire 101 pendant trois périodes successives d'immobilisation des convoyeurs.

On comprend que plusieurs lots de caisses de volailles peuvent être situés simultanément dans différentes chambres du tunnel 10.

Grâce à cette invention, il est possible d'étourdir ou d'euthanasier les volailles avant leur abattage, d'une manière minimisant les agressions et l'inconfort ressentis par les volailles, et d'améliorer la qualité de la viande en comparaison de celle produite conformément à des procédés traditionnels.

Ainsi, on a trouvé que l'approche de l'invention permet de fournir une chair de meilleure qualité (en ce qui concerne sa couleur notamment) que les procédés usuels par électrocution.

L'installation de l'invention donne la possibilité avantageuse d'introduire un certain nombre de volailles placées dans plusieurs cages, caisses ou conteneurs dans les chambres de traitement ce qui permet d'augmenter notablement le débit de traitement.

L'installation conforme à l'invention peut être incorporée dans une ligne d'abattage existante.

En amont de l'installation, il peut être prévu un dispositif complémentaire pour améliorer la qualité de l'étourdissement à l'aide d'un gaz ou d'un mélange de gaz particulier, et éviter la sensation de privation d'oxygène que peuvent ressentir les volailles en début de processus d'étourdissement (de sorte à répondre au mieux à la notion de bien-être animal).

Le temps de passage des volailles dans les chambres (et donc leur temps d'exposition à chaque atmosphère) et les concentrations du mélange de gaz sont fonction notamment du type de volailles à étourdir et de leur poids, et de la vitesse d'abattage.

L'installation est également adaptée pour étourdir des mammifères.

Le tunnel 10 comprend une partie inférieure 120 sur laquelle sont montés les moyens de transport et une partie supérieure 121 formant capot comprenant une paroi supérieure reliant des parois latérales. La partie supérieure 121 est montée mobile verticalement sur la partie inférieure 120 (flèche D' de la figure 2). Les bords longitudinaux de la partie inférieure 120 portent des joints d'étanchéité sur lesquels viennent reposer les parois latérales de la partie supérieure 121.

Dans une variante, la partie supérieure 121 comprend plusieurs sections ou capots juxtaposés de façon étanche, trois par exemple. Au moins un de ces capots peut être soulevé ou abaissé par rapport à la partie inférieure 120.

De façon avantageuse, il est prévu des moyens de levage par câbles (non représentés) du ou des capots de la partie supérieure 121 du tunnel 10 pour faciliter l'accès aux chambres du tunnel 10 et leur nettoyage.

Un ou plusieurs joints souples s'étendant sur la longueur du tunnel 10 assurent l'étanchéité de ce dernier lorsque la ou les partie(s) supérieure(s) 121 mobile(s) est/sont en position basse.

Ce joint souple en compression peut être substitué par un joint d'eau, notamment pour les tunnels de grandes dimensions.

Un ou plusieurs joints verticaux assurent l'étanchéité entre les capots lorsque ces derniers sont tous ou en partie mobiles par rapport à la partie inférieure.

Une configuration particulière d'un tunnel d'une installation conforme à l'invention est schématisée sur la figure 3.

Ce tunnel 10' est fractionné verticalement en plusieurs sections assurant une continuité de traitement.

Le tunnel 10' comprend, dans l'exemple de la figure 3, trois sections distinctes comprenant chacune une partie inférieure et une partie supérieure, ces sections étant aptes à communiquer entre elles par des ouvertures obturables lorsqu'elles sont assemblées les unes aux autres.

La première section 10A' délimite la première chambre de traitement, la deuxième section 10B' délimité le sas intermédiaire de passage et la troisième section 10C' délimite la deuxième chambre de traitement.

Dans des variantes, il peut être prévu plus de trois sections distinctes de tunnel.

La première section 10A' de tunnel est mobile axialement par rapport au sol, la partie supérieure, ou capot, 121A étant en outre mobile verticalement par rapport à la partie inférieure 120A.

La deuxième section 10B' de tunnel est fixe, la partie supérieure ou capot 121B étant mobile verticalement par rapport à la partie inférieure 120B.

La troisième section 10C' de tunnel est mobile axialement par rapport au sol, la partie supérieure ou capot 121C étant en outre mobile verticalement par rapport à la partie inférieure 120C.

En d'autres termes, les première et troisième sections 10A' et 10C' peuvent être écartées de la deuxième section 10B' centrale qui est fixe. Il est ainsi possible de déplacer la première section 10A' et de lever sa partie supérieure 121A pour une opération de maintenance, tout en isolant les deuxième et troisième sections 10B' et 10C' qui peuvent rester sous pression.

Conformément à l'invention, sur toute la longueur du tunnel 10', la concentration en dioxyde de carbone croît progressivement, les caisses de volailles étant transportées successivement sur les convoyeurs motorisés 100A, 100B, 100C de l'entrée E vers la sortie S du tunnel 10'.

Il est prévu des joints J verticaux qui sont comprimés entre les sections 10A', 10B', 10C' du tunnel 10'.

Ces joints sont, par exemple, des joints gonflables.

Il peut être prévu, par ailleurs, des cheminées/conduits de guidage en déplacement vertical des portes guillotines, avec ou sans joint d'étanchéité.

Le tunnel peut, par ailleurs, présenter une forme autre que rectiligne, en "U" ou en "L" par exemple.

Ces autres formes peuvent nécessiter la mise en œuvre de moyens d'étanchéité entre les différentes sections du tunnel.

Le nombre de chambres du tunnel de l'installation n'est en outre pas limité à trois. Il peut être prévu davantage de chambres d'étourdissement et notamment plusieurs sas intermédiaires dans un même tunnel.

L'augmentation de la concentration de gaz d'étourdissement dans le tunnel peut présenter une autre forme qu'une rampe. Cette concentration peut augmenter progressivement par seuils successifs, par exemple.

L'installation peut comprendre au moins un port d'injection/alimentation en gaz d'étourdissement dans la première chambre et au moins un port d'injection/alimentation en gaz d'étourdissement dans la deuxième chambre. Dans une mise en œuvre particulière, il est prévu au moins un port d'injection/alimentation en gaz d'étourdissement dans le sas intermédiaire.

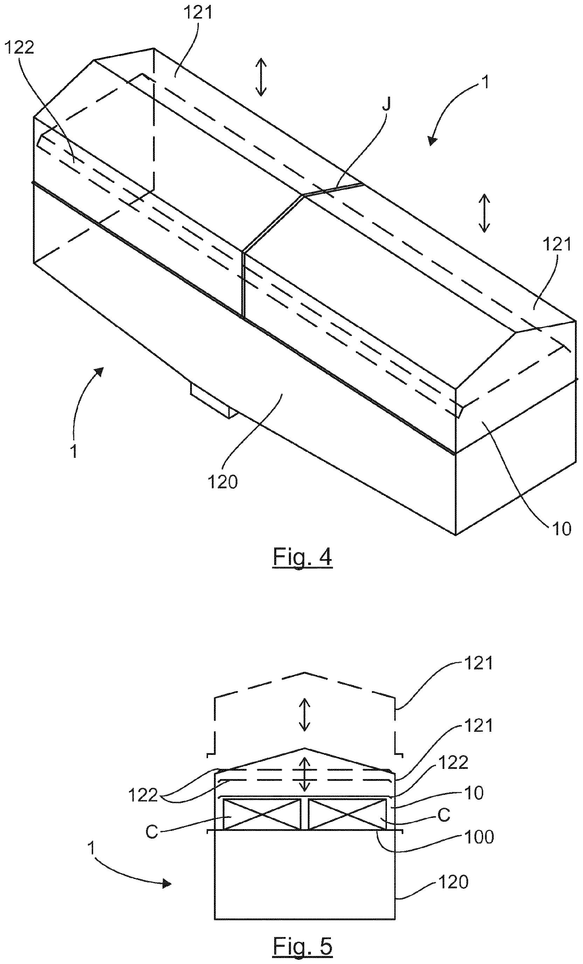

Les figures 4 et 5 sont des vues en perspective et en coupe transversale respectivement d'une structure particulière de tunnel d'une installation 1 conforme à l'invention (cette dernière est illustrée partiellement).

Comme décrit précédemment, le tunnel 10 comprend un sas intermédiaire qui isole la première chambre de la deuxième chambre (non illustrés).

Le tunnel 10 illustré comprend, à titre d'exemple, deux capots 121 juxtaposés entre lesquels est disposés un joint gonflable. Les capots 121 sont mobiles verticalement, indépendamment l'un de l'autre, par rapport à une partie inférieure fixe.

Le tunnel 10 comprend en outre au sein de la partie supérieure 121 un toit intérieur 122 mobile verticalement qui permet de fermer les caisses C transitant dans le tunnel 10 (ces caisses C qui contiennent les animaux étant ouvertes par défaut) et d'éviter que les volailles ne s'échappent.

Des moyens de réglage (non illustrés) permettent d'ajuster la position verticale du toit intérieur 122 en fonction de la hauteur des caisses C. En effet, des caisses de hauteurs différentes peuvent transiter dans le tunnel 10.

On a représenté sur la figure 5 la partie supérieure 121 en position abaissée de fermeture (en traits pleins) et en position relevée (en traits interrompus).

On a également représenté le toit intérieur 122 en position de fermeture des caisses C (en traits pleins) et dans deux autres positions (en traits interrompus) correspondant à des hauteurs de caisses différentes.

Un tel toit intérieur peut être mis en œuvre dans les installations décrites en relation avec les figures 1 à 3.

## Revendications

1. Installation (1) pour l'étourdissement de volailles comprenant un tunnel (10) de traitement des volailles, ledit tunnel (10) comprenant au moins :
- une première chambre (100) équipée d'une ouverture d'introduction des volailles dans ledit tunnel (10) et de premiers moyens de transport (100A) des volailles à travers la première chambre (100) jusqu'à une ouverture de transfert des volailles,
- une deuxième chambre (102) équipée d'une ouverture de réception des volailles et de deuxièmes moyens de transport (101A) de la volaille à travers la deuxième chambre (102) jusqu'à une ouverture de sortie des volailles dudit tunnel (10),
- une chambre intermédiaire (101) de passage séparant les première et deuxième chambres (100, 102) et communiquant à ses extrémités avec l'ouverture de transfert de la première chambre (100) et l'ouverture de réception de la deuxième chambre (102), ladite chambre intermédiaire (101) étant équipée de troisièmes moyens de transport (101A) de la volaille à travers la chambre intermédiaire (101),
les première et deuxième chambres (100, 102) étant pourvues de moyens d'alimentation en gaz d'étourdissement assurant une augmentation de la concentration de gaz d'étourdissement de l'ouverture d'introduction des volailles dans le tunnel (10) vers l'ouverture de sortie des volailles dudit tunnel (10),
ledit tunnel (10) comprenant :
- une partie inférieure (120) sur laquelle sont montés lesdits premiers, deuxièmes et troisièmes moyens de transport (100A, 101A, 102A), et
- une partie supérieure (121) comprenant une paroi supérieure reliant des parois latérales, ladite partie supérieure (121) reposant sur la partie inférieure (120) et étant reliée à des moyens de levage destinés à soulever ladite partie supérieure (121) par rapport à ladite partie inférieure (120),
ladite installation (1) étant **caractérisée en ce qu'**elle comprend au moins un port (130, 131) d'injection/alimentation en gaz d'étourdissement dans la partie inférieure de la première chambre (100) et au moins un port (132) d'injection/alimentation en gaz d'étourdissement dans la partie inférieure de la deuxième chambre (102).

2. Installation (1) selon la revendication 1, **caractérisée en ce que** lesdites ouvertures sont chacune obturées par des portes à guillotines (110, 111, 112, 113).

3. Installation (1) selon la revendication 1 ou 2, **caractérisée en ce que** les bords longitudinaux de la partie inférieure (120) portent des moyens d'étanchéité sur lesquels viennent reposer les parois latérales de la partie supérieure (121).

4. Installation (1) selon l'une des revendications 1 à 3, **caractérisée en ce que** ledit tunnel comprend plusieurs sections (10A', 10B', 10C') de tunnel, au moins une de ces sections (10A', 10B', 10C') étant mobile par rapport à au moins une autre desdites sections (10A', 10B', 10C').

5. Installation (1) selon la revendication 4, **caractérisée en ce qu'**elle comprend des joints d'étanchéité (J) disposés entre lesdites sections (121A, 121B, 121C) de tunnel assurant l'étanchéité du tunnel (10).

6. Installation (1) selon l'une des revendications 1 à 5, **caractérisée en ce que** lesdits premiers, deuxièmes et troisièmes moyens de transport (100A, 101A, 102A) sont entraînés de façon intermittente de sorte que les volailles se trouvent dans chacune desdites chambres (100, 101, 102) pendant une période d'arrêt de chacun des moyens de transport correspondants.

7. Installation (1) selon l'une des revendications 1 à 6, **caractérisée en ce qu'**elle comprend des obstacles au sein desdites chambres (100, 101, 102) destinés contrôler le flux de retour de gaz d'étourdissement de la deuxième chambre (102) vers la première chambre (100).

8. Installation (1) selon l'une des revendications 1 à 7, **caractérisée en ce qu'**elle comprend au moins un toit intérieur (122) disposé dans ladite partie supérieure (121) et réglable en hauteur, ledit au moins un toit intérieur (122) étant destiné à vernir fermer des caisses de volailles portées par les moyens de transport dudit tunnel (10).

## Patentansprüche

1. Anlage (1) zum Betäuben von Geflügel, umfassend einen Tunnel (10) zum Behandeln des Geflügels, wobei der Tunnel (10) mindestens aufweist:
- eine erste Kammer (100), die mit einer Öffnung zum Einführen des Geflügels in den Tunnel (10) und ersten Mitteln zum Befördern (100A) des Geflügels durch die erste Kammer (100) bis zu einer Übergabeöffnung des Geflügels ausgestattet ist,
- eine zweite Kammer (102), die mit einer Öffnung zum Aufnehmen des Geflügels und zweiten Mitteln zum Befördern (101A) des Geflügels durch die zweite Kammer (102) bis zu einer Austrittsöffnung des Geflügels aus dem Tunnel (10) ausgestattet ist,
- eine Zwischenkammer (101) des Durchgangs, die die erste und die zweite Kammer (100, 102) trennt und an ihren Enden mit der Übergabeöffnung der ersten Kammer (100) und der Aufnahmeöffnung der zweiten Kammer (102) in Verbindung steht, wobei die Zwischenkammer (101) mit dritten Mitteln zum Befördern (101A) des Geflügels durch die Zwischenkammer (101) ausgestattet ist,
wobei die erste und die zweite Kammer (100, 102) mit Mitteln zur Zufuhr von Betäubungsgas versehen sind, die eine Erhöhung der Konzentration an Betäubungsgas von der Öffnung zum Einführen des Geflügels in den Tunnel (10) in Richtung der Austrittsöffnung des Geflügels aus dem Tunnel (10) gewährleisten,
wobei der Tunnel (10) aufweist:
- einen unteren Teil (120), an dem die ersten, zweiten und dritten Mittel zum Befördern (100A, 101A, 102A) befestigt sind, und
- einen oberen Teil (121), der eine obere Wand aufweist, die Seitenwände verbindet, wobei der obere Teil (121) auf dem unteren Teil (120) ruht und mit Hebemitteln verbunden ist, die dazu bestimmt sind, den oberen Teil (121) in Bezug auf den unteren Teil (120) anzuheben,
wobei die Anlage (1) **dadurch gekennzeichnet ist, dass** sie mindestens eine Öffnung (130, 131) zum Einspritzen/Zuführen von Betäubungsgas in den unteren Teil der ersten Kammer (100) und mindestens eine Öffnung (132) zum Einspritzen/Zuführen von Betäubungsgas in den unteren Teil der zweiten Kammer (102) aufweist.

2. Anlage (1) nach Anspruch 1, **dadurch gekennzeichnet, dass** die Öffnungen jeweils durch Falltüren (110, 111, 112, 113) verschlossen sind.

3. Anlage (1) nach Anspruch 1 oder 2, **dadurch gekennzeichnet, dass** die Längsränder des unteren Teils (120) Dichtungsmittel tragen, auf denen die Seitenwände des oberen Teils (121) ruhen.

4. Anlage (1) nach einem der Ansprüche 1 bis 3, **dadurch gekennzeichnet, dass** der Tunnel mehrere Tunnelabschnitte (10A', 10B', 10C') aufweist, wobei mindestens einer dieser Abschnitte (10A', 10B', 10C') in Bezug auf mindestens einen anderen der Abschnitte (10A', 10B', 10C') beweglich ist.

5. Anlage (1) nach Abschnitt 4, **dadurch gekennzeichnet, dass** sie Dichtungen (J) aufweist, die zwischen den Tunnelabschnitten (121A, 121B, 121C) angeordnet sind, die die Dichtheit des Tunnels (10) gewährleisten.

6. Anlage (1) nach einem der Ansprüche 1 bis 5, **dadurch gekennzeichnet, dass** die ersten, zweiten und dritten Mittel zum Befördern (100A, 101A, 102A) derart intermittierend angetrieben sind, dass sich das Geflügel in jeder der Kammern (100, 101, 102) für einen Zeitraum des Stillstands jedes dieser entsprechenden Mittel zum Befördern befindet.

7. Anlage (1) nach einem der Ansprüche 1 bis 6, **dadurch gekennzeichnet, dass** sie Hindernisse in den Kammern (100, 101, 102) aufweist, die dazu bestimmt sind, den Rückfluss des Betäubungsgases von der zweiten Kammer (102) zu der ersten Kammer (100) zu steuern.

8. Anlage (1) nach einem der Ansprüche 1 bis 7, **dadurch gekennzeichnet, dass** sie mindestens ein inneres Dach (122) aufweist, das in dem oberen Teil (121) angeordnet ist und höhenverstellbar ist, wobei mindestens ein inneres Dach (122) dazu bestimmt ist, die Geflügelkisten zu schließen, die von den Mitteln zum Befördern des Tunnels (10) getragen werden.

## Claims

1. Facility (1) for stunning poultry comprising a poultry treatment tunnel (10), said tunnel (10) comprising at least:
- a first chamber (100) equipped with an opening for introducing the poultry into said tunnel (10) and with first conveying means (100A) for conveying the poultry through the first chamber (100) to an opening for transferring the poultry,
- a second chamber (102) equipped with an opening for receiving the poultry and with second conveying means (101A) for conveying the poultry through the second chamber (102) to an opening for evacuating the poultry from said tunnel (10),
- an intermediate pass-through chamber (101) separating the first and second chambers (100, 102) and communicating, at the ends thereof, with the transfer opening of the first chamber (100) and the receiving opening of the second chamber (102), said intermediate chamber (101) being equipped with third conveying means (101A) for conveying the poultry through the intermediate chamber (101),
the first and second chambers (100, 102) being provided with stunning gas supply means ensuring an increase in the concentration of stunning gas from the opening for introducing the poultry into the tunnel (10) to the opening for evacuating the poultry from said tunnel (10),
said tunnel (10) comprising:
- a lower portion (120) on which said first, second and third conveying means (100A, 101A, 102A) are mounted, and
- an upper portion (121) comprising an upper wall connecting side walls, said upper portion (121) resting on the lower portion (120) and being connected to lifting means intended to raise said upper portion (121) relative to said lower portion (120),
said facility (1) being **characterised in that** it comprises at least one port (130, 131) for injecting/supplying stunning gas into the lower portion of the first chamber (100) and at least one port (132) for injecting/supplying stunning gas into the lower portion of the second chamber (102).

2. Facility (1) according to claim 1, **characterised in that** each of said openings are closed off by guillotine doors (110, 111, 112, 113).

3. Facility (1) according to claim 1 or 2, **characterised in that** the longitudinal edges of the lower portion (120) support sealing means on which the side walls of the upper portion (121) are at rest.

4. Facility (1) according to one of claims 1 to 3, **characterised in that** said tunnel comprises a plurality of tunnel sections (10A', 10B', 10C'), at least one of these sections (10A', 10B', 10C') being capable of moving relative to at least one other of said sections (10A', 10B', 10C').

5. Facility (1) according to claim 4, **characterised in that** it comprises leak-proof seals (J) disposed between said tunnel sections (121A, 121B, 121C) ensuring the imperviousness of the tunnel (10).

6. Facility (1) according to one of claims 1 to 5, **characterised in that** said first, second and third conveying means (100A, 101A, 102A) are driven in an intermittent manner such that the poultry dwells in each of said chambers (100, 101, 102) for a stopping period of each of the corresponding conveying means.

7. Facility (1) according to one of claims 1 to 6, **characterised in that** it comprises obstacles within said chambers (100, 101, 102) intended to control the stunning gas return flow from the second chamber (102) to the first chamber (100).

8. Facility (1) according to one of claims 1 to 7, **characterised in that** it comprises at least one inner roof (122) disposed in said upper portion (121) and height-adjustable, said at least one inner roof (122) being intended to close crates of poultry carried by the conveying means of said tunnel (10).
